# EUROPEAN PATENT SPECIFICATION

(11) **EP 3 291 684 B1**
(45) Date of publication and mention of the grant of the patent: **06.03.2019**
(21) Application number: 16705587.0
(22) Date of filing: 29.01.2016
(51) Int. Cl.: A23C 9/12, A01J 11/16, A23C 9/123

(54) **METHOD FOR MAKING YOGURT OR ANOTHER FERMENTED MILK-BASED PRODUCT**
VERFAHREN ZUR HERSTELLUNG VON JOGHURT ODER EINEM ANDEREN FERMENTIERTEN MILCHBASIERTEN PRODUKT
PROCÉDÉ DE FABRICATION D'UN YAOURT OU D'UN AUTRE PRODUIT À BASE DE LAIT FERMENTÉ

(30) Priority: 30.04.2015 IT PR20150030
(43) Date of publication of application: 14.03.2018
(73) Proprietor: GEA Mechanical Equipment Italia S.p.A., 43123 Parma (IT)
(72) Inventor: GRASSELLI, Silvia, 43123 Parma (IT); MARCUCCI, Marco, 43123 Parma (IT); SANDEI, Mattia, 43038 Sala Baganza (IT)
(74) Representative: Dondi, Silvia
(86) International application number: PCT/IB2016/050476
(87) International publication number: WO 2016/174528

(56) References cited:
- WO-A1-2007/060288
- WO-A1-2008/000913
- US-A1- 2012 040 053

## Description

### Technical field

The present invention relates to a method for making yogurt or another fermented milk-based product. In particular, the invention proposed herein may be used in the dairy industry for producing yogurt, animal or vegetable cream (with fat content of up to 15%) and fermented milk.

### Background art

As is known, the industrial production of yogurt starts with the "maintenance" step, during which the milk is heated, filtered to remove any impurities and cooled to a temperature of below 5°C. The maintenance step allows the lipid and protein characteristics of the milk to stabilise in order to measure them and guarantee correct preservation during the subsequent processing steps.

After the maintenance, the milk is pasteurised, i.e. subjected to a thermal treatment that aims to eliminate pathogenic microorganisms, promote the development of the microbial flora subsequently inoculated, make the curd more compact and reduce the phenomenon of the separation of whey. For the production of set yogurt (i.e. full coagulation) the pasteurisation consists of maintaining the temperature at about 90°C for 5 minutes.

The pasteurisation is followed by the homogenisation wherein the particles of fat are broken up to contrast the formation of agglomerates and to uniform their dimensions. The homogenisation pressure is typically comprised between 200 and 250 bar.

To increase the compactness of the yogurt a "concentration" step may be envisaged, wherein the solid substance content of the milk is increased to 15% through evaporation, ultra-filtration and, often, powdered milk addition.

This is followed by the fermentation step, during which the temperature of the milk is brought up to about 40°C and a mixture of bacteria is inoculated, for example the colony of *Steptococcus thermophilus* and *Lactobacillus bulgaricus* in equal proportions. For example, the inoculation takes place in a simple tank.

In the production of set yogurt, i.e. with full coagulation, the inoculated milk must be transferred into the pots quickly, for example, 30 minutes - one hour at the most.

The inoculated bacteria multiply using lactose as a source of energy, therefore the concentration of the latter is reduced while lactic acid is produced in parallel, which is responsible for the lowering of the pH from 4 to 5, with consequent precipitation of casein and formation of curd.

The pots are kept in a warm chamber for an amount of time comprised between 3 and 6 hours, according to the inoculated mixture and the fermentation temperature set.

Alternatively, the transfer time can be increased by lowering the temperature to about 20°C, therefore the multiplication speed of the bacteria is reduced.

Once the curd has formed and the desired acidity has been reached, the pots are transferred into a blast chiller where they are cooled to below 18°C to stop the fermentation process.

Subsequently, the pots are moved into a refrigeration cell for further cooling to 4°C and for storage.

The addition of liquid flavourings takes place directly in the inoculation tank, whereas fruit or solid additives are dosed directly into the final containers.

The main drawback of the production cycle described above lies in the high energy expenditure of some steps. In particular, to reach high viscosity and good consistency of the final product the homogenisation pressure must be at least 200-250 bar. These are relatively high values which imply high energy consumption, as well as wear on components and reduction of the life span thereof.

Moreover, compounds are often added (such as enzymes or proteins) to the standard product which improve its rheology properties but imply an overall increase in the costs of the recipe.

Document US 2012/0040053 discloses a method for producing an acidified milk product (i.e. yogurt) comprising a step of treating the milk substrate with an enzyme having transglutaminase activity. This results in a product with improved features, among which shelf-life flavour stability and mouth feel.

Document WO 2008/000913 discloses a process for producing a dairy product with improved texture. In this method a combination of flax fibers and transglutaminase enzyme is used. Nevertheless, the homogenisation step is carried out at high pressure by means of a Gaulin homogeniser at 190 bar.

### Disclosure of the invention

In this context, the object of the present invention is to provide a method for making yogurt or another fermented milk-based product, which uses less energy than the known solutions.

In particular, the object of the present invention is to propose a method for making yogurt or another fermented milk-based product, which allows the viscosity and texture of the final product to be increased without increasing the cost of the recipe.

The technical task set and the objects specified are substantially attained by a method for making yogurt or another fermented milk-based product according to claim 1, said method comprising the following steps (which are not in chronological order):
- pasteurising the milk;
- adding to the milk an enzyme preparation based on transglutaminase at a concentration of 0.5-3 units per gram of proteins contained in the milk, the transglutaminase being supported on vegetable fibres;
- homogenising the pasteurised milk by forcing the milk through a gap afforded between a lower annular chamber and an upper annular chamber of a homogenising valve;
- subjecting the homogenised milk to fermentation.

For example, the addition of the enzyme preparation to the milk takes place before the step of pasteurising the milk, with transglutaminase at a concentration of 2-3 units per gram of proteins contained in the milk. Alternatively, the addition of the enzyme preparation to the milk takes place after the step of pasteurising the milk, with transglutaminase at a concentration of 0.5-2 units per gram of proteins contained in the milk. Preferably, fermentation takes place by inoculating a predefined bacterial culture at a temperature comprised between 42°C and 44°C.

In the preferred embodiment, the vegetable fibres that support the transglutaminase enzyme are obtained from potato (*Solanum tuberosum*) and psyllium seeds (*Plantago ovata*).

Preferably, the vegetable fibres are in a weight percentage comprised between 5% and 10% of the enzyme preparation.

Preferably, the enzyme preparation comprises demineralized buttermilk. The enzyme preparation described above, in its preferred embodiment, is instantly soluble, a physical property obtained through a granulation production process wherein gum arabic is used as a processing aid.

The homogenising valve comprises an annular passage head and an annular impact head interposed between the lower annular chamber and the upper annular chamber. The passage gap for the milk is defined between the passage head and the impact head.

### Brief description of drawings

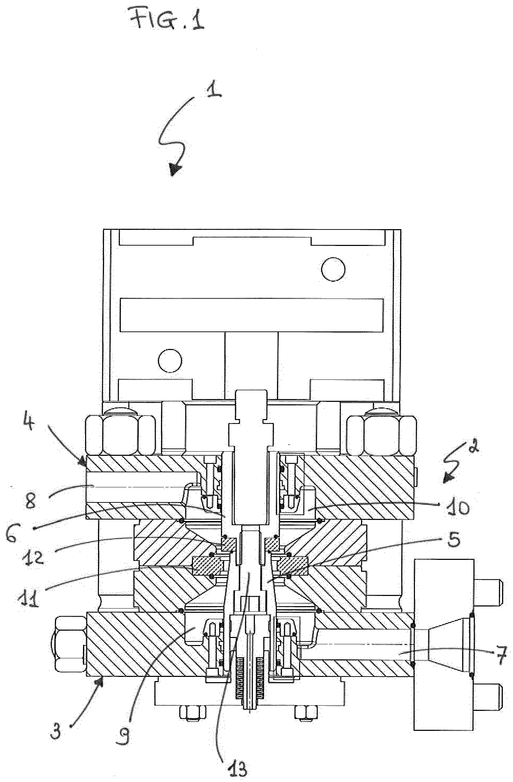

Further characteristics and advantages of the present invention will become more apparent from the following indicative, and hence nonlimiting, description of a preferred, but not exclusive, embodiment of a method for making yogurt or another fermented milk-based product, wherein the homogenisation step is performed in a homogenising valve illustrated in figure 1, in a sectional view.

### Detailed description of preferred embodiments of the invention

In particular, the description proposed herein will refer to the production of yogurt. For example, the method can be used both for making set yogurt (i.e. full coagulation) and for making creamy yogurt. Furthermore, the method can also be used for making animal or vegetable cream or fermented milk.

The method comprises the steps of:
- pasteurising the milk;
- homogenising the pasteurised milk;
- subjecting the homogenised milk to fermentation.

In particular, the milk is pasteurised according to known techniques which are not the subject matter of the present invention.

The pasteurisation is followed by the homogenisation step, which is performed by forcing the milk through a gap afforded between a lower annular chamber 9 and an upper annular chamber 10 of a homogenising valve 1.

In the preferred embodiment described and illustrated herein, the homogenising valve 1 comprises a valve body 2 defining a through hole with an axial extension with respect to the valve body 2.

Preferably, the valve body 2 is formed by the assembly of a lower valve body 3 and an upper valve body 4, which are axially aligned.

The valve 1 comprises a lower piston 5, inserted in a first section of the through hole at the lower valve body 3, and an upper piston 6, inserted in a second section of the through hole at the upper valve body 4. The lower piston 5 and the upper piston 6 are integrally coupled.

The valve 1 presents an inlet 7 for the fluid (in this case milk) at high pressure and an outlet 8 for the homogenised fluid at low pressure. The inlet 7 can be connected to a high pressure pump (not shown).

Between the valve body 2 and the lower piston 5, the lower annular chamber 9 is afforded, into which the inlet 7 for fluid at high pressure opens.

Between the valve body 2 and the upper piston 6, the upper annular chamber 10 is afforded, into which the outlet 8 opens. In particular, the upper annular chamber 10 transfers the homogenised fluid at low pressure to the outlet 8 of the valve 1.

The valve 1 comprises an annular passage head 11 and an annular impact head 12, which have axial symmetry and are interposed between the lower annular chamber 9 and the upper annular chamber 10.

The passage head 11 is integral with the valve body 2.

The impact head 12 is integrally coupled to the lower piston 5 and to the upper piston 6 so as to form an assembled member. For example, the coupling is performed by means of a screw 13, which is part of the assembled organ.

The valve 1 is provided with means for moving the assembled organ in the axial direction towards the passage head 11 so that the impact head 12 defines with the passage head 11 a gap for the passage of fluid (in this case milk) from the lower annular chamber 9 to the upper annular chamber 10.

In particular, the movement of the assembled member towards the passage head 11 contrasts the pressure exerted by the fluid contained in the lower annular chamber 9 on the impact head 12.

Originally, the method also comprises a step of adding to the milk an enzyme preparation based on transglutaminase at a concentration of 0.5-3 units per gram of protein contained in the milk. The transglutaminase is supported on vegetable fibres.

The vegetable fibres supporting the enzyme have high water retention capacity coupled with the presence of glycoproteins. In fact, they contain a special quantity of specific amino acids (in particular lysine) which represent the optimal substrate for the transfer reaction performed by the transglutaminase.

The vegetable fibres therefore act as an active support for the enzyme becoming interposed and covalently bonding between the various caseins and whey proteins thanks to the action of transglutaminase, causing an increase in the water retention of the milk proteins as well as an improvement in the overall structure of the curd.

In the preferred embodiment, the vegetable fibres that support the transglutaminase enzyme are obtained from potato (*Solanum tuberosum*) and psyllium seeds (*Plantago ovata*). This choice allows the best performance levels to be obtained in terms of viscosity of the finished product.

Preferably, the vegetable fibres are present in a weight percentage comprised between 5% and 10% of the enzyme preparation.

Preferably, the enzyme preparation comprises demineralized buttermilk as a bulking agent.

In the preferred embodiment, the enzyme preparation is a commercial product known as Reactyn YO+ by the company Campus S.r.l. having its registered office in Via Sala Baganza 3, Quartiere Industriale "I Filagni", 43033 Collecchio (Parma), Italy.

In a first implementation of the method, the addition of this enzyme preparation to the milk takes place prior to the pasteurisation step. In this case, the concentration of transglutaminase is 2-3 units per gram of proteins contained in the milk.

In a second implementation of the method, the addition of this enzyme preparation to the milk takes place after the pasteurisation step. In this case, the concentration of transglutaminase is 0.5-2 units per gram of protein contained in the milk.

The method for making yogurt just described and the use of an enzyme preparation based on transglutaminase supported by vegetable fibres for making yogurt homogenised with a valve having the characteristics described above allows:
- the energy consumption and wear on the components of the homogenising valve to be reduced, thanks to a significant reduction in homogenisation pressure;
- the yogurt production times to be reduced;
the rheology characteristics of the yogurt (such as viscosity and texture) to be preserved without increasing the cost of the recipe.

Such properties have been demonstrated fully by the following three tests performed in a laboratory.

In a first test, the viscosity of the following products was compared:
A- fresh pasteurised semi-skimmed milk
B- fresh pasteurised semi-skimmed milk with the addition of the enzyme preparation based on vegetable fibres and transglutaminase at a concentration of 0.5-2 units per gram of proteins contained in the milk (after the milk pasteurisation step).

Specifically, the enzyme preparation is Reactyn YO+ by Campus S.r.l. The aim of this first test is to check if the addition of the enzyme preparation based on transglutaminase supported by vegetable fibres allows the homogenisation pressure to be lowered with the same rheology characteristics.

The pasteurisation step, performed in a known way, is followed by the homogenisation step in the homogenising valve 1 described above. During the subsequent fermentation step, the products were kept at the temperature of 42°C for about 7-8 hours, therefore the pH was lowered to 4.4-4.5. Subsequently, the products were brought to a temperature of about 4°C for storage.

Any curds were broken and smoothed with a 850 micron filter.

The comparison took place after the products had been homogenised in two steps:
- first homogenisation step at different pressures: 80, 150 and 300 bar;
- second homogenisation step at the pressure of 50 bar.

The viscosity, expressed in Cps in the table below, was measured every second for a minute using a Brookfield viscometer with RV03 probe, maintaining a constant temperature of about 4°C. The viscosity values expressed in the table represent the mean of the measured values.

| **Homogenisation pressures during the first step (bar)** | **Viscosity of product A (Cps)** | **Viscosity of product B (Cps)** |
|---|---|---|
| 80 | 360 | 3119 |
| 150 | 906 | 6804 |
| 300 | 1733 | 6686 |

As can be noted from the experimental data obtained, to increase the viscosity of product A (without the enzyme preparation based on transglutaminase supported by vegetable fibres) it is necessary to subject the product to higher homogenising pressures, up to 300 bar.

Instead, for product B, which contains the enzyme preparation based on transglutaminase supported by vegetable fibres, already at 80 bar a higher viscosity is obtained than that obtained with product A at 300 bar.

In a second test, the viscosity of the following products was compared:
C- fresh pasteurised semi-skimmed milk with added proteins
D- fresh pasteurised semi-skimmed milk with added proteins and the enzyme preparation based on vegetable fibres and transglutaminase at a concentration of 2-3 units per gram of proteins contained in the milk (before the milk pasteurisation step)

Specifically, the enzyme preparation is Reactyn YO+ by Campus S.r.l. The addition of proteins to products C and D took place as per the tables below.

| **Ingredients of Product C** | **Percentage** |
|---|---|
| Semi-skimmed milk (1.5% fat, 2.3% protein) | 95.00 |
| Semi-skimmed powdered milk | 2.80 |
| Powdered whey | 2.20 |
| Enzyme preparation based on transglutaminase supported by vegetable fibres | 0.00 |

The percentage of proteins in product C is equal to 4.26.

| **Ingredients of Product D** | **Percentage** |
|---|---|
| Semi-skimmed milk (1.5% fat, 2.3% protein) | 97.62 |
| Semi-skimmed powdered milk | 0.50 |
| Powdered whey | 1.82 |
| Enzyme preparation based on transglutaminase supported by vegetable fibres | 0.06 |

The percentage of proteins in product D is equal to 3.51.

The aim of this second test is to check if the addition of the enzyme preparation based on transglutaminase supported by vegetable fibres allows the homogenisation pressure to be lowered and the protein content to be reduced with the same rheology characteristics.

The pasteurisation step, performed in a known way, is followed by the homogenisation step in the homogenising valve 1 described above. During the subsequent fermentation step, the products were kept at the temperature of 42°C for about 7-8 hours, therefore the pH was lowered to 4.4-4.5. Subsequently, the products were brought to a temperature of about 4°C.

Any curds were broken and smoothed with a 850 micron filter.

The comparison took place after the products had been homogenised in two steps:
- first homogenisation step at different pressures: 80, 150 and 300 bar;
- second homogenisation step at the pressure of 50 bar.

The viscosity, expressed in Cps in the table below, was measured every second for a minute using a Brookfield viscometer with RV03 probe, maintaining a constant temperature of about 4°C. The viscosity values expressed in the table represent the mean of the measured values.

| **Homogenisation pressures during the first step (bar)** | **Viscosity of product C (Cps)** | **Viscosity of product D (Cps)** |
|---|---|---|
| 80 | 3144 | 6605 |
| 150 | 3038 | 3529 |
| 300 | 4458 | 4470 |

Compared to the first test, the viscosity differences are less marked. This is due to the fact that product C has about a 0.75% higher protein content than product D, whereas in the first test products A and B have the same protein content. Furthermore, the enzyme preparation based on transglutaminase supported by vegetable fibres was added prior to the pasteurisation step.

In any case, it can be noted that - with the same pressure and homogenisation - product D still has a higher viscosity than product C.

In particular, the increased viscosity effect for product D is more marked at the minimum pressure of 80 bar. This effect is however less evident at higher pressures since at such pressures the protein complexes formed by the added enzyme preparation are broken up, hence reducing the viscosity.

In a third test, the viscosity of the following products was compared:
E- fresh pasteurised semi-skimmed milk with added proteins
F- fresh pasteurised semi-skimmed milk with added proteins and the enzyme preparation based on vegetable fibres and transglutaminase (supported by vegetable fibres) at a concentration of 1-2 units per gram of proteins contained in the milk (after the milk pasteurisation step, precisely during the inoculation of the bacterial mixture).

Specifically, the enzyme preparation is Reactyn YO+ made by Campus S.r.l.

The addition of proteins to products E and F took place as per the tables below.

| **Ingredients of product E** | **Percentage** |
|---|---|
| Semi-skimmed milk (protein content 3.1-3.4%) | 78.98 |
| Semi-skimmed powdered milk | 5.19 |
| Cream 45% | 8.33 |
| Sugar | 7.50 |
| Enzyme preparation based on transglutaminase supported on vegetable fibres | 0.00 |

The percentage of proteins in product E is equal to 4.41.

| **Ingredients of product F** | **Percentage** |
|---|---|
| Semi-skimmed milk (protein content 3.1-3.4%) | 78.98 |
| Semi-skimmed powdered milk | 5.19 |
| Cream 45% | 8.33 |
| Sugar | 7.50 |
| Enzyme preparation based on transglutaminase supported on vegetable fibres | 0.06 |

The percentage of proteins in product D is equal to 4.41.

Compared to the second test, here the two products E and F have the same protein percentage, therefore the only variable effectively comes from the addition of the enzyme preparation based on transglutaminase supported on vegetable fibres after pasteurisation.

The aim of this third test is to check if the addition of the enzyme preparation based on vegetable fibres and transglutaminase allows the homogenisation pressure to be lowered with the same rheology and protein characteristics.

The pasteurisation step, performed in a known way, is followed by the homogenisation step in the homogenising valve 1 described above. During the subsequent fermentation step, the products were kept at the temperature of 42°C for about 7-8 hours, therefore the pH was lowered to 4.4-4.5. Subsequently, the products were brought to a temperature of about 4°C.

Any curds were broken and smoothed with a 850 micron filter.

The comparison took place after the products had been homogenised in two steps:
- first homogenisation step at the pressure of 180 bar;
- second homogenisation step at the pressure of 50 bar.

The viscosity, expressed in Cps in the table below, was measured every second for a minute using a Brookfield viscometer with RV03 probe, maintaining a constant temperature of about 4°C. The viscosity values expressed in the table represent the mean of the measured values.

For product E a viscosity of 21347 Cps was measured, whereas for product F a viscosity of 29773 Cps was measured.

From the tests performed, the characteristics of the method for making yogurt, according to the present invention, are clear, as are the advantages.

In particular, the addition to the milk of the enzyme preparation based on transglutaminase supported on vegetable fibres at the indicated concentration and the performance of the homogenisation step in a valve with a double annular chamber allows:
- processing at lower homogenisation pressures (e.g. 80 or 150 bar compared to 300 bar), hence reducing the energy expenditure and the wear on the components of the homogenising valve;
- the yogurt production times to be reduced;
- for the same homogenising pressures, the viscosity of the yogurt to be increased;
for the same homogenising pressures, the protein content to be reduced without affecting the viscosity (which is actually improved), hence also reducing the cost of the recipe.

## Claims

1. Method for making yogurt or another fermented milk-based product, comprising the steps of:
pasteurising the milk;
homogenising the pasteurised milk;
subjecting the homogenised milk to fermentation,
**characterised in that** it further comprises a step of adding to the milk an enzyme preparation based transglutaminase at a concentration of 0.5-3 units per gram of proteins contained in the milk, said transglutaminase being supported on vegetable fibres, said homogenising step comprising forcing the milk through a gap afforded between a lower annular chamber (9) and an upper annular chamber (10) of a homogenising valve (1), said homogenising valve (1) comprising an annular passage head (11) and an annular impact head (12) interposed between said lower annular chamber (9) and said upper annular chamber (10), said gap being defined between the passage head (11) and the impact head (12).

2. Method according to claim 1, wherein the step of adding said enzyme preparation to the milk takes place before the step of pasteurising the milk, with transglutaminase at a concentration of 2-3 units per gram of proteins contained in the milk.

3. Method according to claim 1, wherein the step of adding said enzyme preparation to the milk takes place after the step of pasteurising the milk, with transglutaminase at a concentration of 0.5-2 units per gram of proteins contained in the milk.

4. Method according to any one of the preceding claims, wherein the step of subjecting the milk to fermentation takes place by inoculating a predefined bacterial culture at a temperature comprised between 42°C and 44°C.

5. Method according to any one of the preceding claims, wherein said vegetable fibres are obtained from potato (*Solanum tuberosum*) and psyllium seeds (*Plantago ovata*).

6. Method according to any one of the preceding claims, wherein said vegetable fibres are present in a weight percentage comprised between 5% and 10% of the enzyme preparation.

7. Method according to any one of the preceding claims, wherein said enzyme preparation is obtained by a granulation step in which it is used gum arabic as a coating agent.

8. Method according to any one of the preceding claims, wherein said enzyme preparation comprises demineralized buttermilk.

9. Use of an enzyme preparation based on transglutaminase supported on vegetable fibres for making yogurt or another fermented milk-based product, said milk being added with said preparation with transglutaminase at a concentration of 0.5-3 units per gram of proteins contained in the milk and being subjected to a forced passage through a gap afforded between a lower annular chamber (9) and an upper annular chamber (10) of a homogenising valve (1), said homogenising valve (1) comprising an annular passage head (11) and an annular impact head (12) interposed between said lower annular chamber (9) and said upper annular chamber (10), said gap being defined between the passage head (11) and the impact head (12).

## Patentansprüche

1. Verfahren zur Herstellung von Joghurt oder einem anderen fermentierten milchbasierten Produkt, umfassend die Schritte von:
Pasteurisieren der Milch;
Homogenisieren der pasteurisierten Milch;
Unterziehen der homogenisierten Milch einer Fermentation,
**dadurch gekennzeichnet, dass** es ferner einen Schritt zum Zugeben zur Milch von einer Enzymzubereitung auf Basis von Transglutaminase, in einer Konzentration von 0.5-3 Einheiten pro Gramm Proteine, die in der Milch enthalten sind, wobei die Transglutaminase auf Pflanzenfasern unterstützt wird, wobei der Schritt zum Homogenisieren das Zwingen der Milch durch eine zwischen einer unteren Ringkammer (9) und einer oberen Ringkammer (10) erhaltenen Spalt eines Homogenisierventils (1) umfasst, wobei das Homogenisierventil (1) einen ringförmigen Durchgangskopf (11) und einen ringförmigen Schlagkopf (12) umfasst, die zwischen der unteren Ringkammer (9) und der oberen Ringkammer (10) angeordnet sind, wobei der Spalt zwischen dem Durchgangskopf (11) und dem Schlagkopf (12) definiert ist.

2. Verfahren nach Anspruch 1, wobei der Schritt zum Zugeben von der Enzymzubereitung zur Milch vor dem Schritt zum Pasteurisieren der Milch mit Transglutaminase in einer Konzentration von 2-3 Einheiten pro Gramm Proteine, die in der Milch enthalten sind, stattfindet.

3. Verfahren nach Anspruch 1, wobei der Schritt zum Zugeben von der Enzymzubereitung zur Milch nach dem Schritt zum Pasteurisieren der Milch mit Transglutaminase in einer Konzentration von 0,5-2 Einheiten pro Gramm Proteine, die in der Milch enthalten sind, stattfindet.

4. Verfahren nach einem der vorhergehenden Ansprüche, wobei der Schritt zum Unterziehen der Milch einer Fermentation durch Inokulieren einer vordefinierten Bakterienkultur bei einer Temperatur zwischen 42 °C und 44 °C stattfindet.

5. Verfahren nach einem der vorhergehenden Ansprüche, wobei die Pflanzenfasern aus Kartoffeln (*Solanum tuberosum*) und Psylliumsamen (*Plantago ovata*) gewonnen werden.

6. Verfahren nach einem der vorhergehenden Ansprüche, wobei die Pflanzenfasern in einem Gewichtsprozentsatz zwischen 5% und 10% der Enzymzubereitung vorhanden sind.

7. Verfahren nach einem der vorhergehenden Ansprüche, wobei die Enzymzubereitung durch einen Granulationsschritt erhalten wird, in dem Gummiarabikum als Beschichtungsmittel verwendet wird.

8. Verfahren nach einem der vorhergehenden Ansprüche, wobei die Enzymzubereitung demineralisierte Buttermilch umfasst.

9. Verwendung einer Enzymzubereitung auf Basis von Transglutaminase, die auf Pflanzenfasern unterstützt wird, zur Herstellung von Joghurt oder einem anderen fermentierten milchbasierten Produkt, wobei die Milch mit der Zubereitung mit Transglutaminase in einer Konzentration von 0.5-3 Einheiten pro Gramm Proteine, die in der Milch enthalten sind, zugegeben wird und einem Zwangsdurchgang durch einen Spalt, der zwischen einer unteren Ringkammer (9) und einer oberen Ringkammer (10) eines Homogenisierventils (1) erhalten ist, unterzogen wird, wobei das Homogenisierventil (1) einen ringförmigen Durchgangskopf (11) und einen ringförmigen Schlagkopf (12) umfasst, die zwischen der unteren Ringkammer (9) und der oberen Ringkammer (10) angeordnet sind, wobei der Spalt zwischen dem Durchgangskopf (11) und dem Schlagkopf (12) definiert ist.

## Revendications

1. Procédé de fabrication d'un yaourt ou d'un autre produit à base de lait fermenté, comprenant les étapes de :
pasteuriser le lait ;
homogénéiser le lait pasteurisé ;
soumettre le lait homogénéisé à une fermentation,
**caractérisé en ce qu'**il comprend de plus une étape consistant à ajouter au lait une préparation enzymatique à base de transglutaminase à une concentration de 0,5 - 3 unités par gramme de protéines contenues dans le lait, ladite transglutaminase étant supportée sur des fibres végétales, ladite étape d'homogénéisation comprenant le passage forcé du lait à travers un espace réalisé entre une chambre annulaire inférieure (9) et une chambre annulaire supérieure (10) d'une vanne d'homogénéisation (1), ladite vanne d'homogénéisation (1) comprenant une tête de passage annulaire (11) et une tête à percussion annulaire (12) interposées entre ladite chambre annulaire inférieure (9) et ladite chambre annulaire supérieure (10), ledit espace étant défini entre la tête de passage (11) et la tête à percussion (12).

2. Procédé selon la revendication 1, dans lequel l'étape consistant à ajouter ladite préparation enzymatique au lait a lieu avant l'étape consistant à pasteuriser le lait avec la transglutaminase à une concentration de 2 - 3 unités par gramme de protéines contenues dans le lait.

3. Procédé selon la revendication 1, dans lequel l'étape consistant à ajouter ladite préparation enzymatique au lait a lieu après l'étape consistant à pasteuriser le lait avec la transglutaminase à une concentration de 0,5 - 2 unités par gramme de protéines contenues dans le lait.

4. Procédé selon l'une quelconque des revendications précédentes, dans lequel l'étape consistant à soumettre le lait à une fermentation a lieu par inoculation d'une culture bactérienne prédéfinie à une température comprise entre 42 et 44 °C.

5. Procédé selon l'une quelconque des revendications précédentes, dans lequel lesdites fibres végétales sont obtenues à partir de pomme de terre (*Solanum tuberosum*) et de semences de psyllium (*Plantago ovata*).

6. Procédé selon l'une quelconque des revendications précédentes, dans lequel lesdites fibres végétales sont présentes dans un pourcentage en poids compris entre 5 et 10 % de la préparation enzymatique.

7. Procédé selon l'une quelconque des revendications précédentes, dans lequel ladite préparation enzymatique est obtenue par une étape de granulation dans laquelle de la gomme arabique est utilisée comme enrobant.

8. Procédé selon l'une quelconque des revendications précédentes, dans lequel ladite préparation enzymatique comprend du babeurre déminéralisé.

9. Utilisation d'une préparation enzymatique à base de transglutaminase supportée sur des fibres végétales pour fabriquer du yaourt ou un autre produit à base de lait fermenté, ledit lait étant ajouté à ladite préparation comportant une transglutaminase à une concentration de 0,5 - 3 unités par gramme de protéines contenues dans le lait et étant soumis à un passage forcé à travers un espace réalisé entre une chambre annulaire inférieure (9) et une chambre annulaire supérieure (10) d'une vanne d'homogénéisation (1), ladite vanne d'homogénéisation (1) comprenant une tête de passage annulaire (11) et une tête à percussion annulaire (12) interposées entre ladite chambre annulaire inférieure (9) et ladite chambre annulaire supérieure (10), ledit espace étant défini entre la tête de passage (11) et la tête à percussion (12).
